# EUROPÄISCHE PATENTSCHRIFT

(11) **EP 1 536 962 B1**
(45) Veröffentlichungstag und Bekanntmachung des Hinweises auf die Patenterteilung: **28.02.2007**
(21) Anmeldenummer: 03790876.1
(22) Anmeldetag: 07.08.2003
(51) Int. Cl.: B60H 1/32, B60H 1/00, B60H 1/12, F28D 7/00

(54) **WÄRMEÜBERTRAGERANORDNUNG UND HEIZ-/KÜHLKREISLAUF FUER EINE KLIMAANLAGE EINES FAHRZEUGS UND VERFAHREN ZUR STEUERUNG UND/ODER REGELUNG EINES HEIZ-/KÜHLKREISLAUFES EINER KLIMAANLAGE**
HEAT EXCHANGING SYSTEM, HEATING/COOLING CIRCUIT FOR AN AIR CONDITIONING INSTALLATION OF A VEHICLE, AND METHOD FOR CONTROLLING AND/OR REGULATING A HEATING/COOLING CIRCUIT OF AN AIR CONDITIONING INSTALLATION
SYSTEME D'ECHANGEURS THERMIQUES ET CIRCUIT DE CHAUFFE/REFROIDISSEMENT DESTINE A UNE CLIMATISATION D'UN VEHICULE ET PROCEDE DE COMMANDE ET/OU DE REGLAGE D'UN CIRCUIT DE CHAUFFE/REFROIDISSEMENT D'UNE CLIMATISATION

(30) Priorität: 30.08.2002 DE 10240795
(43) Veröffentlichungstag der Anmeldung: 08.06.2005
(73) Patentinhaber: Behr GmbH & Co. KG, 70469 Stuttgart (DE)
(72) Erfinder: DEMUTH, Walter, 70830 Gerlingen (DE); FEUERECKER, Günther, 70567 Stuttgart (DE); KOTSCH, Martin, 71634 Ludwigsburg (DE); STAFFA, Karl-Heinz, 70567 Stuttgart (DE); WALTER, Christoph, 70469 Stuttgart (DE)
(86) Internationale Anmeldenummer: PCT/EP2003/008771
(87) Internationale Veröffentlichungsnummer: WO 2004/020232

(56) Entgegenhaltungen:
- EP-A- 1 088 689
- EP-A- 1 090 786
- DE-A- 1 755 657
- DE-A- 10 065 112
- DE-A- 10 126 257

## Beschreibung

Die Erfindung betrifft eine Klimaanlage für ein Fahrzeug mit einer Wärmeübertrageranordnung sowie einen Heiz-/Kühlkreislauf für eine derartige Klimaanlage. Des Weiteren betrifft die Erfindung ein Verfahren zur Steuerung und/oder Regelung eines Heiz-/Kohlkreislaufs einer Klimaanlage für ein Fahrzeug.

Üblicherweise ist heute eine Klimaanlage für ein Fahrzeug derart ausgelegt, dass diese sowohl eine Abkühlung eines zu klimatisierenden Luftstromes als auch im sogenannten Wärmepumpenbetrieb eine Aufheizung des Luftstromes ermöglicht. Für einen derartigen, mehrere Funktionen vereinigenden Betrieb der Klimaanlage sind verschiedene Ausführungsformen bekannt.

Beispielsweise ist es aus der DE 30 47 955 A1 bekannt, die Strömungsrichtung eines die Aufheizung und Abkühlung des Luftstromes bewirkenden Kältemittelstromes in Abhängigkeit von der jeweiligen Funktion zu ändern. Diese Schaltung hat den Nachteil, dass sich beim Kühlmodus oder beim Entfeuchten Kondenswasser niederschlägt, so dass es bei Änderung der Funktion auf einen Heizmodus zum Beschlagen der Scheiben des Fahrzeugs (= sogenanntes Flash-Fogging) kommen kann.

Zur Vermeidung eines derartigen Beschlagens der Scheibe ist es aus der DE 39 07 201 C1 bekannt, einen zusätzlichen Wärmeübertrager im Luftstromkanal anzuordnen, welcher nur im Heizmodus zum Heizen verwendet wird. Aus der DE 199 39 028 A1 ist es bekannt, zwei im Luftstromkanal hintereinander geschaltete Wärmeübertrager vorzusehen, welche als Wärmepumpenheizer im Heizmodus betrieben werden.

Eine derartige, alleine durch einen Wärmepumpenheizer bewirkte Heizfunktion, ist aber insbesondere zu Heizbeginn und in Fällen mit Heizleistungsdefizit nicht ausreichend. Darüber hinaus wird häufig nach einigen Minuten im Fahrzeugbetrieb durch die auftretende Motorabwärme eine Kühlmitteltemperatur erreicht, bei der diese Abwärme über einen Kühler an die Umgebung abgeführt werden muss und daher zu Heizzwecken umsonst zur Verfügung stehen würde. Deshalb ist die gemeinsame Nutzung von einem Heizer und einem vom Motorkühlmittel gespeisten Heizkörper im Heizbetrieb in einer Klimaanlage sinnvoll.

Weiterhin ist es aus der EP 1 068 967 A1 bekannt, den als Heizer dienenden Wärmeübertrager mit dem Heizkörper in eine Wärmeübertrageranordnung zu integrieren, so dass ein Wärmeübergang zwischen Luftstrom, Kühlmittelstrom des Heizkörpers und Kältemittelstrom des Heizers ermöglicht ist. Eine daraus resultierende, wärmeleitende Verbindung von Kältemittel und Kühlmittel führt dazu, dass bei einem noch kalten Kühlmittelstrom ein wesentlicher Anteil der Wärme des Kältemittelstroms zur Aufheizung des Kühlmittelstroms und nur ein geringer Anteil zur Aufheizung des Luftstromes genutzt wird. Daher ist ein derartig ausgebildeter Wärmepumpenheizer hinsichtlich des Wirkungsgrads sehr begrenzt bei gleichzeitig geringer Heizleistung.

In der EP 1 090 786 A1 wird eine Klimaanlage mit Wärmepumpenfunktion für ein Fahrzeug beschrieben. Außerhalb des Fahrzeuginnenraums, beispielsweise im Motorraum, ist eine Anordnung aus zwei außenliegenden Wärmetauschern mit einem dazwischen liegenden Kühlmittelkühler angeordnet. Die beiden, den Kühlmittelkühler zwischen sich aufnehmenden Wärmetauscher können über ein Ventil entweder einzeln oder gemeinsam in den Kältemittelkreislauf eingebracht werden. Im Kraftfahrzeuginnenraum ist lediglich ein einzelner Wärmetauscher vorgesehen, der je nach Funktion der Klimaanlage als Verdampfer bzw. als Heizkörper dient. Durch die außenliegende Wärmeübertrageranordnung soll ein Vereisen der außenliegenden Wärmetauscher verhindert werden, bzw. beim Abtauen der Selben beschleunigt werden.

In der DE 17 55 657 A ist eine Kraftfahrzeugklimaanlage beschrieben, bei der der außenliegende, im Motorraum untergebrachte Verflüssiger zweiteilig aufgebaut ist und aus einem Hauptverflüssiger und einem Zusatzverflüssiger besteht. Haupt- und Zusatzverflüssiger sind in Luftdurchströmungsrichtung hintereinander angeordnet. Zwischen den beiden Verflüssigern ist zusätzlich der Kühlmittelkühler des Kraftfahrzeugs angeordnet. Durch diesen Aufbau soll im Falle hoher Außentemperaturen bei hoher Klimaanlagenlast eine ausreichende Kühlung des Motors über den Kühlmittelkühler sichergestellt werden.

Der Erfindung liegt daher die Aufgabe zugrunde, eine Klimaanlage mit einer Wärmeübertrageranordnung mit einem vom Motorkühlmittel gespeisten Heizkörper anzugeben, welche eine gegenüber dem Stand der Technik höhere Heizleistung mit einem höheren Wirkungsgrad aufweist. Darüber hinaus ist ein besonders einfach ausgebildeter Heiz-/Kühlkreislauf für eine Klimaanlage sowie ein Verfahren zur Steuerung und/oder Regelung eines derartigen Heiz-/Kühlkreislaufes einer Klimaanlage anzugeben.

Diese Aufgabe wird bezüglich der Klimaanlage mit der Wärmenbertrageranordnung durch die Merkmale des Anspruchs 1 gelöst. Bezüglich des Heiz-/Kühlkreislaufs bzw. des Verfahrens zur Steuerung und/oder Regelung des Heiz-/Kühlkreislaufs wird die Aufgabe durch die Merkmale der Ansprüche 21 bzw. 23 gelöst.

Die Erfindung geht dabei von der Überlegung aus, dass bei einer Klimaanlage mit einer Wärmeübertrageranordnung zur Beschleunigung der Aufheizung eines mittels der zwischen Heiz- und Kühlmodus umschaltbaren Wärmeübertrageranordnung zu klimatisierenden Luftstromes bei gleichzeitig verbesserter Heizleistung überschüssige Wärme im Motorkühlkreislauf genutzt werden sollte. Darüber hinaus sollten durch verschiedene Funktionsänderungen des Heiz-/Kühlkreislaufes ein kombinierter Entfeuchtungs/Heizungsbetrieb ermöglicht werden. Auch hierbei sollte die Abwärme des Motorkühlkreislaufes genutzt werden können. Hierzu wird eine Wärmeübertrageranordnung angegeben, welche sowohl eine Heizleistung eines im Wärmepumpenbetrieb arbeitenden Wärmeübertragers als auch die Heizleistung eines als konventionellen Heizkörper ausgebildeten Wärmeübertragers nutzt. Durch eine derartige räumliche Trennung von Entfeuchtung und Aufheizung der Luft sowie die gemeinsame Nutzung von Heizkörper und Wärmepumpenheizer sind feuchtebedingte oder kältebedingte Niederschläge in Form von Kondenswasser sicher vermieden. Dabei umfasst die Wärmeübertrageranordnung vorzugsweise einen ersten von einem Kühlmittel primärseitig beaufschlagbaren Wärmeübertrager und einen zweiten, von einem Kältemittel primärseitig beaufschlagbaren Wärmeübertrager, die sekundärseitig in einen Luftströmungskanal, welcher der Durchströmung von dem Fahrzeuginnenraum zuzuführender Luft dient, geschaltet sind, wobei der zweite Wärmeübertrager in zwei Teilelemente aufgeteilt ist und der erste Wärmeübertrager in Luftströmungsrichtung gesehen zwischen den beiden Teilelementen geschaltet ist. Mit anderen Worten: Ein erstes Teilelement oder ein erster Teilblock des zweiten Wärmeübertragers befindet sich luftströmungsseitig vor dem ersten Wärmeübertrager und das zweite andere Teilelement oder der andere Teilblock befindet sich luftströmungsseitig nach dem ersten Wärmeübertrager im Luftströmungskanal. Durch das in Luftströmungsrichtung nach dem ersten Wärmeübertrager angeordnete zweite Teilelement ist sichergestellt, dass der Luftstrom nach Austritt aus dem ersten Wärmeübertrager weiter aufgewärmt wird.

Die erfindungsgemäße Wärmeübertrageranordnung bietet einen guten Kompromiss zwischen einer luftseitigen Anordnung des zweiten Wärmeübertragers vor dem ersten Wärmeübertrager und einer luftseitigen Anordnung des zweiten Wärmeübertragers nach dem ersten Wärmeübertrager.

Die Anordnung des zweiten Wärmeübertragers vor dem ersten Wärmeübertrager gewährleistet zwar einem optimalen Wirkungsgrad der Wärmepumpe, weil der Temperaturhub der Wärmepumpe minimal ist, hat aber den Nachteil, dass die Gesamtheizleistung des ersten und zweiten Wärmeübertragers begrenzt ist und die höchste erreichbare Temperatur immer kleiner ist, als die Temperatur des in den ersten Wärmeübertrager eintretenden Kühlmittels.

Durch die Anordnung des zweiten Wärmeübertragers nach dem ersten Wärmeübertrager läßt sich zwar eine höhere Leistung erreichen, da der nachgeschaltete zweite Wärmeübertrager die vom ersten Wärmeübertrager vorgeheizte Luft weiter erwärmt, hat aber den Nachteil, dass der Wirkungsgrad der Wärmepumpe nicht optimal ist. Der Wirkungsgrad ist vielmehr kleiner als bei der Anordnung des zweiten Wärmeübertragers vor dem ersten Wärmeübertragers.

Demgegenüber läßt sich durch die erfindungsgemäße Aufteilung und Anordnung des zweiten Wärmeübertragers in zwei Teilblöcke, wobei ein erster Teilblock vor dem ersten Wärmeübertrager und ein zweiter Teilblock nach dem ersten Wärmeübertrager angeordnet ist, ein höherer Wirkungsgrad als bei der Anordnung des gesamten zweiten Wärmeübertragers nach dem ersten Wärmeübertragers erzielen, wobei durch die erfindungsgemäße Anordnung gleichzeitig eine höhere Leistung erreichbar ist, weil die Luft nach dem Austritt aus dem ersten Wärmeübertrager durch den zweiten Teilblock des zweiten Wärmeübertragers weiter aufgewärmt wird.

Zur Leistungssteigerung und Erhöhung des Wirkungsgrades für die Aufheizung des Fahrzeuges mündet ein Einlass zur Zuführung des Kältemittels in das in Luftströmungsrichtung gesehen zweite Teilelement. Bevorzugt geht ein Auslass zur Abführung des Kältemittels im Gegensinn zum Luftstrom von dem in Luftströmungsrichtung gesehen ersten Teilelement ab. Durch eine derartige Zuführung und Abführung des Kältemittels ist eine hinreichend gute Aufwärmung des Luftstromes nach dem Austritt aus dem ersten Wärmeübertrager ermöglicht bei gleichzeitig hinreichender Auskühlung des Kältemittelstromes im ersten Teilelement. Alternativ oder zusätzlich kann die Zu- und Abführung des Kältemittels auch im Gleichsinn zum Luftstrom erfolgen. Dabei wird das Kältemittel über einen am ersten Teilelement vorgesehenen Einlass zugeführt und über einen am zweiten Teilelement vorgesehenen Auslass abgeführt.

In einer weiteren bevorzugten Ausführungsform ist ein dritter Wärmeübertrager zur Vorwärmung des in den Kompressor geführten Kältemittels anhand des vom ersten Teilelement abgeführten Kältemittels vorgesehen. Dies führt zu hohen Eintrittstemperaturen bei gleichzeitig kleinen Massenströmen des Kältemittels an der Wärmeübertrageranordnung.

Für eine flexible Durchströmung des zweiten Wärmeübertragers mit dem Kältemittel ist der zweite Wärmeübertrager bevorzugt durch eine Anzahl von parallel durchströmbaren und in einer Ebene parallel zueinander angeordneten Kältemittelrohren gebildet. Je nach Art und Ausführung des zweiten Wärmeübertragers können die Kältemittelrohre dabei nebeneinander oder übereinander in einer Ebene angeordnet sein.

Für eine mehrstufige Aufheizung des Luftstromes sind die Teilelemente des zweiten Wärmetauschers durch in Luftströmungsrichtung gesehen hintereinander geschaltete Kältemittelrohrreihen gebildet. Für einen die beiden Teilelemente oder Teilblöcke des zweiten Wärmetauschers gleichmäßig ausgebildeten Kältemittelstroms sind die einzelnen Kältemittelrohre der Kältemittelrohrreihen bevorzugt anhand von Umlenkungsrohren miteinander verbunden. Durch eine derartige Anordnung von waagerecht oder senkrecht in einer Reihe übereinander oder nebeneinander angeordneten einzelnen Kältemittelrohren der jeweiligen Teilelemente und deren Verbindung mittels Umlenkungs- oder Wenderohren ist der zweite Wärmeübertrager u-förmig ausgebildet.

Zur gleichmäßigen Bespeisung der Wärmeübertrageranoranung sind are Kältemittelrohre mindestens eines der beiden Teilelemente, insbesondere des zweiten Teilelementes an ein gemeinsames Sammelrohr angebunden. Durch die Bespeisung des zweiten Wärmeübertragers mit dem Kältemittelstrom über den in Luftströmungsrichtung gesehen ausgangsseitig vorgesehenen Einlass mittels eines einzelnen Sammelrohres für das Kältemittel zum parallelen Zuführen dieses in die Kältemittelrohre ist eine hinreichend gute Aufwärmung oder Aufheizung des Luftstromes nach dem ersten Wärmeübertrager sichergestellt. Zweckmäßigerweise sind die Kältemittelrohre eines der beiden Teilelemente, insbesondere des ersten Teilelementes, zum Austritt des Kältemittels an ein gemeinsames Verteilerrohr angebunden. Durch eine derartige Sammelbespeisung der Kältemittelrohre und einen derartigen Sammelaustritt der Kältemittelrohre ist eine besonders kompakte Anordnung mit möglichst wenigen Komponenten, insbesondere wenigen Sammel- oder Verteilerrohren, gegeben.

In einer bevorzugten Ausführungsform ist der erste Wärmeübertrager durch eine Anzahl von parallel durchströmbaren und in einer Ebene parallel zueinander angeordneten Kühlmittelrohren gebildet. Beispielsweise sind die Kühlmittelrohre nebeneinander oder übereinander in einer Ebene angeordnet. Üblicherweise ist dabei der erste Wärmeübertrager in einen Wasserkasten integriert, der über mindestens einen Einlass und einen Auslass zum Zu- bzw. Abführen des Kühlmittels verfügt.

Für eine einfache Ausbildung des insbesondere u-förmigen zweiten Wärmeübertragers sind die Kältemittelrohre des zweiten Wärmeübertragers senkrecht zu den Kühlmittelrohren des ersten Wärmeübertragers angeordnet. Hierdurch ist sichergestellt, dass die Umlenkung oder Wendung der Teilelemente des zweiten Wärmeübertragers nicht über einen Wasserkasten oder ein Sammelrohr des ersten Wärmeübertragers geführt werden müssen. Dies bewirkt darüber hinaus eine besonders kompakte Ausführung der aus dem ersten Wärmeübertrager und dem zweiten Wärmeübertrager gebildeten Wärmeübertrageranordnung. Ausschlaggebend für die in Luftströmungsrichtung gesehen verlaufenden Tiefe der gesamten Wärmeübertrageranordnung, welche sich aus der Reihenschaltung von ersten Teilelement, ersten Wärmeübertrager und zweiten Teilelement zusammensetzt, ist insbesondere die Tiefe des Blockes des ersten Wärmeübertragers und nicht die Tiefe des Wasserkastens.

In einer bevorzugten Ausführungsform sind die Kältemittelrohre des zweiten Wärmeübertragers vertikal und die Kühlmittelrohre des ersten Wärmeübertragers horizontal angeordnet. Ist der zweite Teilblock nach dem ersten Wärmeübertrager in einer Kreuzstromschaltung ausgeführt, so wird insbesondere bei zugeschaltetem ersten Wärmeübertrager die Luftaustrittstemperatur entlang der Strömungsrichtung des Kältemittels abnehmen. Dies führt zu einem ungleichmäßigen Links-Rechts-Temperaturprofil, welches insbesondere bei Wärmepumpenschaltungen ausgeprägt ist, die mit Hilfe eines inneren Wärmeübertragers einen sogenannten inneren Wärmetausch der Kältemittelströme nach dem zweiten Wärmeübertrager und vor dem Kompressor durchführen, so dass am zweiten Wärmeübertrager hohe Eintrittstemperaturen aber kleine Massenströme des Kältemittels auftreten. Bei Wärmepumpenschaltungen ohne inneren Wärmetausch treten höhere Massenströme bei niedrigeren Eintrittstemperaturen des Kältemittels auf und das Links-Rechts-Temperaturprofil ist nicht so ausgeprägt. Die Temperaturverteilung läßt sich in vorteilhafter Weise durch eine entsprechende Beaufschlagung des ersten Wärmetauschers kompensieren, wobei die linke und rechte Hälfte des ersten Wärmetauschers getrennt beaufschlagbar sind.

Alternativ zu einer derartigen Kreuzschaltung können die Kältemittelrohre des zweiten Wärmeübertragers zu den Kältemittelrohren des ersten Wärmeübertragers parallel angeordnet sein. Dabei muss sicher gestellt werden, dass die Umlenkungs- oder Wenderohre hinreichend gut um die Kühlmittelrohre des ersten Wärmeübertragers, insbesondere um den Ein- und/oder Auslass umgelenkt werden. Dabei kann es zu einer Beeinträchtigung der Kompensation der Temperaturverteilung kommen. Dies kann vorteilhaft sein, wenn eine Temperaturschichtung entlang der Höhe der Wärmeübertrageranordnung erwünscht ist, wobei die Rohre dabei vertikal verlaufen.

Um im unteren Bereich in Luftströmungsrichtung gesehen einen wärmeren Luftstrom zu erhalten, werden der zweite Wärmeübertrager, insbesondere die Kältemittelrohre des zweiten Teilelementes von unten nach oben mit Kältemittel beaufschlagt. Darüber hinaus kann durch einen einstellbaren Kältemittelstrom eine gewollte Temperaturschichtung eingestellt werden. Hierdurch lässt sich bei einem großen Massenstrom und kleinem Hochdruck und somit niedrigen Kältemitteleintrittstemperaturen oder bei kleineren Massenstrom und großem Hochdruck und somit hohen Kältemitteleintrittstemperaturen eine im Wesentlichen gleiche Leistung, insbesondere Heizleistung, umsetzen. Im ersten Fall ist dabei eine möglichst geringe oder kleine Temperaturschichtung und im zweiten Fall eine besonders große Temperaturschichtung an der Wärmeübertrageranordnung eingestellt. Eine derartige Temperaturschichtung, insbesondere deren Einstellung erfolgt dabei durch eine entsprechende Steuerung eines den Luftstrom bewirkenden Kompressors und durch entsprechende Steuerung, insbesondere Schließen oder Öffnen von dem Kompressor nachgeschalteten Expansionsorganen, insbesondere Ventilen.

Für eine selektive Beaufschlagung von einzelnen Zonen des Luftstromes ist das jeweilige Teilelement des zweiten Wärmeübertragers segmentiert ausgebildet. Daraus resultierende einzelne Segmente der Teilelemente sind für eine individuelle Temperierung der einzelnen Zonen einzeln schaltbar und bzgl. des zuführbaren Kältemittelstromes steuerbar. So ist beispielsweise im Heizmodus, d. h. im sogenannten Wärmepumpenbetrieb der Wärmeübertrageranordnung eine sogenannte Links-Rechts-Trennung der Teilelemente, oder auch eine sogenannte Vier-Zonen-Klimatisierung des Luftstromes durch eine entsprechende Segmentierung der Teilelemente ermöglicht. Die Segmentierung oder Teilung des Kältemittelstromes erfolgt dabei vorzugsweise in den Rückläufen des zweiten Wärmeübertragers, d. h. im in Luftströmungsrichtung gesehen ersten Teilelement bei Gegensinnbetrieb oder im zweiten Teilelement bei Gleichsinnbetrieb, da dort die Temperaturen des Kältemittels am niedrigsten und somit die Anforderungen an betreffende Einstell- oder Expansionsorgane, insbesondere Ventile, gering sind. Für eine Links-Rechts-Trennung der Teilelemente verlaufen die einzelnen Kältemittelrohre der zugehörigen Kältemittelrohrreihen senkrecht. Demgegenüber wird bei horizontal im Luftstromkanal angeordneten Kältemittelrohren eine Kältemittelschichtung und somit Zonentemperierung des Luftstromes in der Vertikalen gesteuert.

In einer bevorzugten Ausführungsform sind der erste Wärmeübertrager und der zweite Wärmeübertrager im Luftströmungskanal im Kreuzgleichstrom geschaltet. Mit anderen Worten: Der Kreuzgleichstrom umfasst drei Durchgänge - zwei äußere am jeweiligen Teilelement des zweiten Wärmeübertragers und einen inneren am ersten Wärmeübertrager -, welche im Gleichsinn mit der Strömungsrichtung des Luftstroms von einem Kältemittelstrom bzw. einem Kühlmittelstrom durchströmt werden. Für eine weitere Leistungserhöhung sind alternativ zum Kreuzgleichstrom der erste Wärmeübertrager und der zweite Wärmeübertrager im Luftströmungskanal im Kreuzgegenstrom geschaltet. Dabei kann der Kreuzgegenstrom ebenfalls drei Durchgänge - zwei äußere und einen inneren - umfassen, wobei der Kühlmittel- und/oder der Kältemittelstrom im Gegensinn zum Luftstrom verlaufen. Je nach Art und Ausführung der Wärmeübertrageranordnung können weitere Durchgänge, d. h. weitere Teilelemente des zweiten Wärmeübertragers und/oder ein geteilter erster Wärmeübertrager vorgesehen sein. Dabei sind beliebige Kombinationen von Strömungsrichtungen im Gegensinn und/oder Gleichsinn und/oder im Kreuzstrom möglich.

Für eine besonders einfache Montage und Ausbildung der Wärmeübertrageranordnung sind der erste Wärmeübertrager und der zweite Wärmeübertrager in ein gemeinsames Modul integriert. Mit anderen Worten: Der erste Wärmeübertrager und der zweite Wärmeübertrager bilden eine bauliche Einheit, in der Art eines Monoblocks. Hierdurch ist eine einfache Montage und ein einfacher Aufbau eines die Wärmeübertrageranordnung aufnehmenden Wasserkasten ermöglicht. Dabei sind die Rohrbündel der beiden Wärmeübertrager frei gleitend oder schwimmend im Wasserkasten gehalten, wodurch geringe Wärmespannungen auftreten.

In einer bevorzugten Ausführungsform sind der erste Wärmeübertrager und der zweite Wärmeübertrager über eine durchgehende Rippe miteinander verbunden. Für eine weitgehend gute thermische Entkopplung des ersten Wärmeübertragers vom zweiten Wärmeübertrager ist die Rippe mit einer Ausnehmung oder Aussparung versehen. Durch eine derartige, eine bauliche Einheit bildenden Wärmeübertrageranordnung ist ein besonders kompakter Aufbau gegeben. Insbesondere sind die beiden Wärmeübertrager in einem Verfahrensschritt, z. B. durch Verlöten der Rohrreihen oder Rohrbündeln mittels der durchgehenden und allen Rohrreihen gemeinsamen Rippe möglich. Verlaufen bei der als eine Einheit ausgebildeten Wärmeübertrageranordnung die Kältemittelrohre parallel zu den Kühlmittelrohren, so kann durch ein weitgehend gutes Anschmiegen oder Anlehnen der Umlenkrohre des zweiten Wärmeübertragers an den ersten Wärmeübertrager, insbesondere an dessen Wasserkasten, erreicht werden, dass der Abstand zwischen dem ersten Wärmeübertrager und dem zweiten Wärmeübertrager, insbesondere deren Blöcke oder Teilelemente möglichst klein und nicht durch die Breite des Wasserkastens vergrößert wird.

Alternativ zur baulichen Einheit können der erste Wärmeübertrager und der zweite Wärmeübertrager getrennt voneinander angeordnet sein. Je nach Art und Ausführung der getrennt ausgebildeten Wärmeübertrageranordnung sind dabei sowohl die Rohrreihen als auch die einzelnen Rohre sowie die Rippen voneinander getrennt angeordnet. In einer besonders bevorzugten Ausführungsform sind der erste Wärmeübertrager und der zweite Wärmeübertrager mit einem Abstand von 1 mm bis 5 mm voneinander angeordnet. Mit anderen Worten: Zwischen dem ersten Teilelement und dem ersten Wärmeübertrager sowie zwischen dem ersten Wärmeübertrager und dem zweiten Teilelement beträgt der jeweilige Abstand mindestens 1 mm.

Bei einer mehrere Funktionen kombinierenden Klimaanlage ist ein entsprechend ausgebildeter Heiz-/Kühl-Kreislauf mit einer in einem Luftströmungskanal sekundärseitig geschalteten Wärmeübertrageranordnung versehen, die einen ersten im Kühlmodus und/oder im Heizmodus von einem Kühlmittel primärseitig durchströmbaren Wärmeübertrager und einen zweiten im Heizmodus von einem Kältemittel primärseitig durchströmbaren Wärmeüberträger umfasst, wobei der erste Wärmeübertrager in Luftströmungsrichtung gesehen zwischen zwei Teilelementen des zweiten Wärmeübertragers geschaltet ist. Bei einem derartig ausgebildeten Heiz-/Kühlkreislauf wird erfindungsgemäß ein zu klimatisierender Luftstrom im Heizmodus in Luftströmungsrichtung gesehen mittels eines zweistufigen Kältemittelstromes und eines zwischen den zwei Kältemittelströmen geschalteten Kühlmittelstromes aufgeheizt. Je nach Art und Ausbildung werden die Kältemittelströme und der Kühlmittelstrom im Kreuzgleichstrom oder Kreuzgegenstrom zum Luftstrom geführt.

Die mit der Erfindung erzielten Vorteile bestehen insbesondere darin, dass durch ein derartiges, kombiniertes Aufheizen des Luftstromes durch einen ersten, mit einem Kühlmittel beaufschlagbaren Wärmeübertrager und einen zweiten, mit Kältemittel beaufschlagbaren Wärmeübertrager, welcher derart geteilt ist, dass er den ersten Wärmeübertrager umgreift, ein mehrstufiges Aufheizen des Luftstromes ermöglicht ist, welches eine Steigerung der Heizleistung und somit eine Erhöhung des Wirkungsgrades der Aufheizung bei gleichzeitiger Entlastung des in einem Motorkühlkreislauf geschalteten ersten Wärmeübertragers ermöglicht. Des Weiteren ist bei einer derartigen Umgreifung des ersten Wärmeübertrages durch den zweiten Wärmeübertrager, insbesondere durch dessen Teilelemente, eine besonders kompakte Anordnung der Wärmeübertrageranordnung gegeben, welcher darüber hinaus durch gemeinsame Sammel- oder Verteilerrohre besonders einfach und kostengünstig aufgebaut ist.

Ausführungsbeispiele der Erfindung werden anhand einer Zeichnung näher erläutert. Darin zeigen:
- Figur 1: schematisch eine Wärmeübertrageranordnung mit einem in zwei Teilelemente aufgeteilten zweiten Wärmeübertrager und einem zwischen den zwei Teilelementen in Luftströmungsrichtung gesehen angeordneten, ersten Wärmeübertrager,
- Figur 2: schematisch eine Wärmeübertrageranordnung mit im Kreuzgleichstrom durchströmbaren, ersten und zweiten Wärmeübertrager,
- Figur 3: schematisch eine Wärmeübertrageranordnung mit im Kreuzgegenstrom durchströmbaren Wärmeübertragern,
- Figur 4: schematisch in perspektivischer Darstellung einen aus zwei Teilelementen gebildeten, zweiten Wärmeübertrager,
- Figur 5: schematisch in perspektivischer Darstellung die Wärmeübertrageranordnung mit einem ersten Wärmeübertrager, der von einem zweiten Wärmeübertrager umgeben ist,
- Figur 6: schematisch in perspektivischer Darstellung einen zweiten Wärmeübertrager mit segmentierten Teilelementen,
- Figur 7: schematisch einen ersten Heiz-/Kühlkreislauf mit einer Wärmeübertragungsanordnung gemäß Figur 1
- Figur 8: schematisch einen zweiten Heiz-/Kühlkreislauf mit einer Wärmeübertragungsanordnung gemäß Figur 1.

Einander entsprechende Teile sind in allen Figuren mit den gleichen Bezugszeichen versehen.

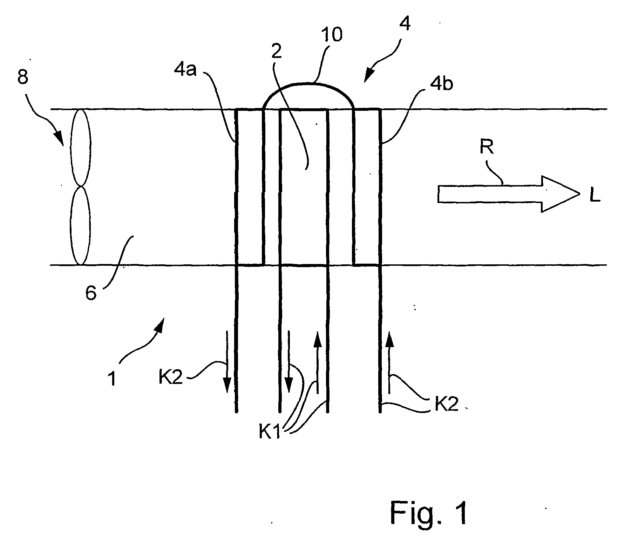

Figur 1 zeigt eine Wärmeübertrageranordnung 1 mit einem ersten von einem Kühlmittel K1 primärseitig beaufschlagbaren Wärmeübertrager 2 und einem zweiten von einem Kältemittel K2 primärseitig beaufschlagbaren Wärmeübertrager 4. Der erste Wärmeübertrager 2 und der zweite Wärmeübertrager 4 sind dabei sekundärseitig in einen Luftströmungskanal 6 geschaltet. Zur Erzeugung des Luftstroms L ist im Luftströmungskanal 6 in Luftströmungsrichtung R gesehen eingangsseitig vor der Wärmeübertrageranordnung 1 ein Gebläse 8 angeordnet.

Für eine stufenweise Aufheizung einer im Luftströmungskanal 6 strömenden Luft L in Luftströmungsrichtung R gesehen ist der zweite Wärmeübertrager 4 in zwei Teilelemente 4a und 4b aufgeteilt. Der erste Wärmeübertrager 2 ist dabei in Luftströmungsrichtung R zwischen den beiden Teilelementen 4a und 4b geschaltet. Die Teilelemente 4a und 4b sind über einen Umlenkkanal 10 miteinander verbunden.

Die Wärmeübertrageranordnung 1 mit den zugehörigen, ineinander geschachtelt angeordneten, ersten Wärmeübertrager 2 und den zweiten Wärmeübertrager 4 kann je nach Bespeisung dieser mit dem Kühlmittelstrom K1 bzw. dem Kältemittelstrom K2 mit beliebig verschiedenen Richtungsläufen auch im Hinblick auf den Wärmeübergang zum Luftstrom L ausgebildet sein und entsprechend durchströmt werden.

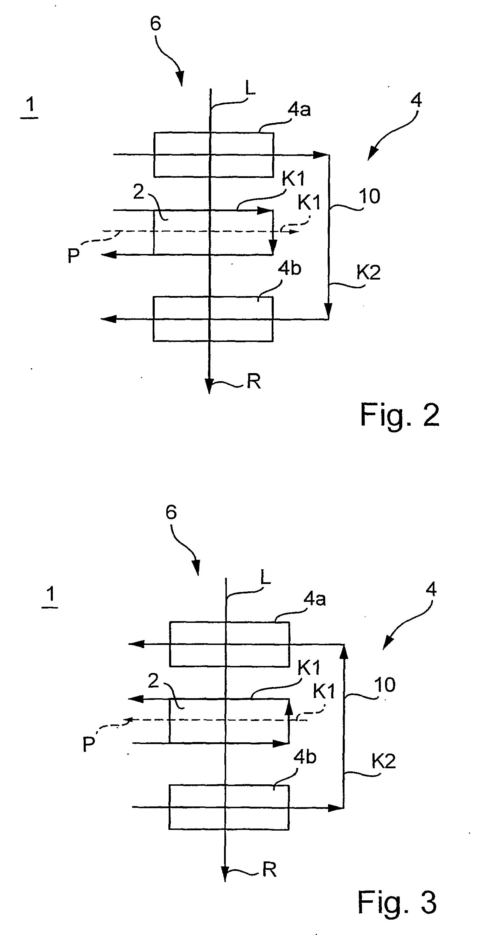

In Figur 2 ist beispielhaft die Wärmeübertrageranordnung 1 mit im Luftströmungskanal 6 im Kreuzgleichstrom geschalteten, ersten Wärmeübertrager 2 und zweiten Wärmeübertrager 4 gezeigt. Dabei werden der Kühlmittelstrom K1 und der Kältemittelstrom K2 im Gleichsinn zum Luftstrom L in Luftströmungsrichtung R durch die Wärmeübertrageranordnung 1 geführt. Figur 3 zeigt eine alternative Ausführungsform für die Durchströmung der Wärmeübertrageranordnung 1, wobei der erste Wärmeübertrager 2 und der zweite Wärmeübertrager 4 im Luftströmungskanal 6 im Kreuzgegenstrom geschaltet sind. In beiden Ausführungsformen der Wärmeübertragungsanordnung 1 nach den Figuren 2 und 3 ist der jeweilige Kühlmittelstrom K1 im ersten Wärmeübertrager 2 an sich als Gegenstrom ausgebildet. Alternativ kann der Kühlmittelstrom K1 auch einströmig, d. h., in Luftströmungsrichtung R gesehen lediglich als Kreuzstrom linksseitig zur Bespeisung eintreten und rechtsseitig wieder austreten oder umgekehrt (durch gestrichelten Pfeil P dargestellt).

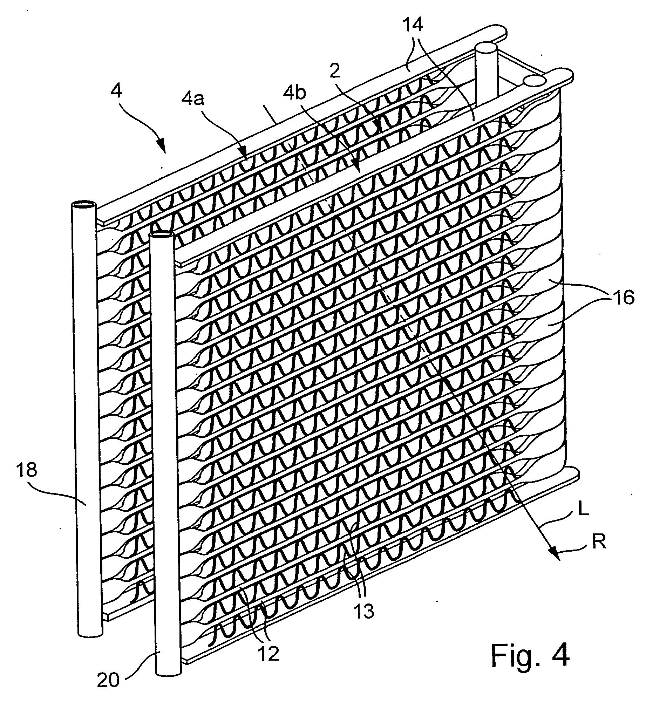

Figur 4 zeigt einen Teil einer Wärmeübertrageranordnung 1, insbesondere den zweiten Wärmeübertrager 4. Der zweite Wärmeübertrager 4 ist dabei durch eine Anzahl von parallel durchströmbaren und in einer Ebene parallel zueinander angeordneten Kältemittelrohren 12 gebildet. Die Kältemittelrohre 12 sind beispielsweise als sogenannte Flachrohre ausgebildet. Zwischen den als Flachrohre ausgebildeten Kältemittelrohren 12 ist eine Verrippung 13 üblicherweise in Form einer Wellrippe angeordnet, In der Ausführungsform nach Figur 4 sind die Kältemittelrohre 12 horizontal angeordnet.

Dabei sind die Kältemittelrohre 12 in einer Ebene übereinander angeordnet. Alternativ können die Kältemittelrohre 12 je nach Ausbildung der Wärmeübertrageranordnung 1 auch vertikal und demzufolge nebeneinander angeordnet sein.

Die beiden Teilelemente 4a und 4b des zweiten Wärmetauschers 4 sind in Luftströmungsrichtung R gesehen durch hintereinander geschaltete Kältemittelrohrreihen 14 gebildet. Die Kältemittelrohrbündel oder die Kältemittelrohrreihen 14 der jeweiligen Teilelemente 4a bzw. 4b sind dabei derart voneinander beabstandet, dass zwischen diesen der erste Wärmeübertrager 2 aufgenommen werden kann. Zur Verbindung der einzelnen Kältemittelrohre 12 der jeweiligen Kältemittelrohrreihe 14 sind diese anhand von Umlenkungsrohren 16 miteinander verbunden. Zur Bespeisung der Kältemittelrohre 12 mit dem Kältemittel K2 sind die betreffenden Kältemittelrohre 12 an ein gemeinsames Sammelrohr 18 angebunden. Zum Austritt des Kältemittels K2 sind die Kältemittelrohre 12 des betreffenden Teilelementes 4a an ein gemeinsames Verteilerrohr 20 angebunden. Je nach Art und Ausführung der Durchströmung der Wärmeübertrageranordnung 1 kann die Bespeisung und/oder der Auslass des Kältemittels K2 am jeweils anderen Teilelement 4b bzw. 4a erfolgen.

Im dargestellten Ausführungsbeispiel sind die dem Sammler 18 bzw. dem Verteiler 20 zugewandten Rohrenden der Kältemittelrohre 12 vorzugsweise um 90° tordiert und übereinander in einen Längsschlitz im Sammler 18 bzw. Verteiler 20 eingeführt. Es ist aber auch möglich die Rohrenden ohne Tordierung in Querschlitze im Sammler 18 bzw. Verteiler 20 einzuführen. Zudem sind im dargestellten Ausführungsbeispiel die jeweiligen in einer Ebene liegenden Kältemittelrohre 12 des ersten Teilelements 4a und des zweiten Teilelements 4b und das zugehörige Umlenkrohr 16 einstückig, ausgebildet, wobei das einstückig ausgeführte Rohr auf beiden Seiten der Umlenkung um jeweils 90° tordiert ist, wobei die Umlenkung einer Biegung von insgesamt 180° entspricht die in zwei Biegeabschnitten von jeweils 90° realisiert ist, wobei der Abstand zwischen den beiden Biegeabsschnitten in etwa den entsprechende Abmessungen des ersten Wärmeübertragers 2 entspricht, der zwischen den beiden Teilelementen 4a, 4b angeordnet ist. Es ist aber auch vorstellbar das beschriebene Rohr mehrteilig, beispielsweise dreiteilig auszuführen.

Grundsätzlich ist es aber auch möglich, dass an der Einlass- bzw. Auslasseite und an der Umlenkseite der Teilelemente 4a, 4b ein Sammler 18 bzw. Verteiler 20 angeordnet ist, in dem die Rohrenden wie oben beschrieben angeordnet sind. Die Umlenkung bzw. die Verbindung des Sammlers 18 bzw. Verteilers 20 des ersten Teilelements 4a mit dem entsprechenden Sammler 18 bzw. Verteiler 20 des zweiten Teilelements 4b zur Kommunikation des ersten Teilelements 4a mit dem zweiten Teilelement 4b erfolgt dann beispielsweise über mindestens ein Umlenkrohr, wobei beispielsweise am oberen und/oder am unteren Ende des Sammlers 18 bzw. Verteilers 20 ein Umlenkrohr angeordnet ist. Zudem ist es vorstellbar den Sammler 18 bzw. Verteiler 20 an der Umlenkseite der Teilelemente als ein Bauteil auszuführen, welches sowohl die Sammlerfunktion und die Verteilfunktion übernimmt. Durch entsprechende Mittel innerhalb eines solchen Bauteil können dann beliebige Verbindungen zwischen den Kältemittelrohren des ersten Teilelements 4a und des zweiten Teilelements 4b realisiert werden. Das Sammler/Verteilerbauteil ist so bemessen, das der notwendige Abstand zwischen dem ersten Teilelement 4a und dem zweiten Teilelement 4b zum Einführen des ersten Wärmeübertragers 2 vorhanden ist.

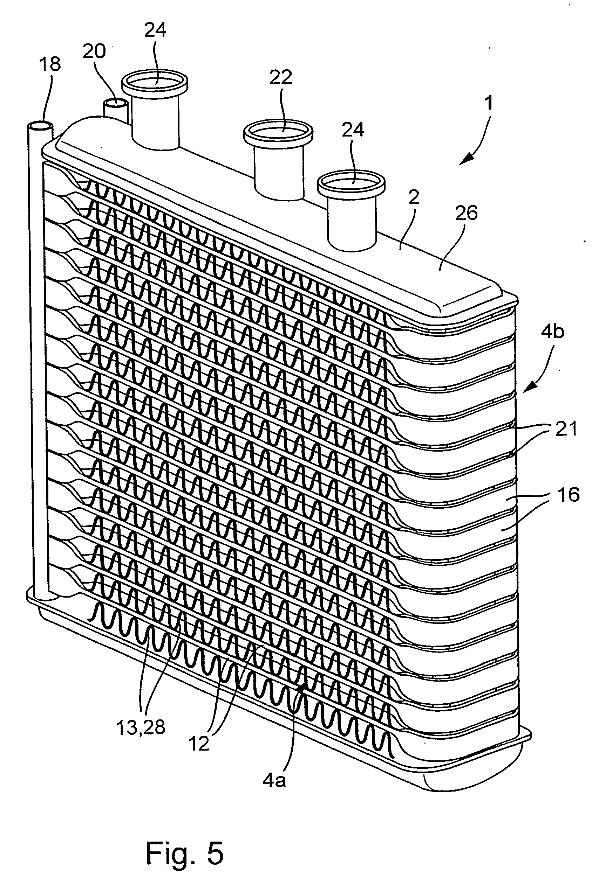

Figur 5 zeigt in perspektivischer Darstellung eine Wärmeübertrageranordnung 1 mit dem zwischen den beiden Teilelementen 4a und 4b angeordneten ersten Wärmeübertrager 2. Dabei ist der erste Wärmeübertrager 2 durch eine Anzahl von parallel durchströmbaren und in einer Ebene parallel zueinander angeordneten Kühlmittelrohren 21 gebildet, welche zu einer Kühlmittelrohrreihe oder einem Rohrbündel zusammen geschaltet sind. Je nach Art und Ausbildung des ersten Wärmeübertragers 2 kann dieser lediglich eine Kühlmittelrohrreihe umfassen. Der herkömmliche Aufbau eines als sogenannten Heizkörper ausgebildeten ersten Wärmeübertragers 2 ist beispielhaft in der DE 195 10 283 A1 beschrieben. Es sind aber auch andere Formen und Ausgestaltungen für den ersten Wärmeübertrager 2 möglich. Üblicherweise ist der erste Wärmeübertrager 2 in einen einen Verbrennungsmotor kühlenden Motorkühlkreislauf eingebunden. Dazu wird der erste Wärmeübertrager 2 über entsprechende Einlässe 22 und Auslässe 24 in den Kühlmittelkreislauf eingebunden. Insbesondere ist der erste Wärmeübertrager 2 in einem sogenannten Wasserkasten 26 angeordnet.

Für eine möglichst kompakte Ausführung der Wärmeübertrageranordnung 1 sind der erste Wärmeübertrager 2 und der zweite Wärmeübertrager 4 als eine bauliche Einheit ausgeführt, d. h. in einem gemeinsamen Modul integriert. Dazu ist die zwischen den Kältemittelrohren 12 in der jeweiligen Kältemittelrohrreihe 14 angeordnete Verrippung 13 in der Art einer durchgehenden Rippe 28 mit der Verrippung des ersten Wärmeübertragers 2 verbunden. D. h. die zwischen den einzelnen Kühlmittelrohren 21 und Kältemittelrohren 12 der Teilelemente 4a, 4b verlaufende Verrippung 13 ist als eine die gesamte Wärmeübertrageranordnung 1 durchlaufende Rippe 28 ausgebildet. Zur thermischen Entkopplung des ersten Wärmeübertragers 2 vom zweiten Wärmeübertrager 4, insbesondere von dessen Teilelementen 4a und 4b, ist die durchgehende Rippe 28 mit einer nicht näher dargestellten Ausnehmung versehen. Eine derartig als ein integriertes Modul ausgebildete Wärmeübertrageranordnung 1 ist in einem Herstellungsverfahren durch Verlöten der Rohrreihen mit der durchgehenden Rippe 28 herstellbar.

Alternativ zu der in einer baulichen Einheit ausgebildeten Wärmeübertrageranordnung 1 können der erste Wärmeübertrager 2 und der zweite Wärmeübertrager 4 voneinander separat und somit getrennt angeordnet sein. Dabei sind diese bevorzugt in einem Abstand von 1 mm bis 5 mm angeordnet. Bei einer derartig getrennten Anordnung des zweiten Wärmeübertragers 4 vom ersten Wärmeübertrager 2 sind die einzelnen Teilelemente 4a und 4b ebenfalls vom ersten Wärmeübertrager 2 mit einem Abstand von mindestens 1 mm voneinander beabstandet angeordnet. Für eine möglichst gute thermische Entkopplung des ersten Wärmeübertragers 2 vom zweiten Wärmeübertrager 4 sind bei der getrennten Anordnung auch die betreffenden Rohre 12, 16, 21 und Rippen 13, 27 voneinander getrennt und separat angeordnet.

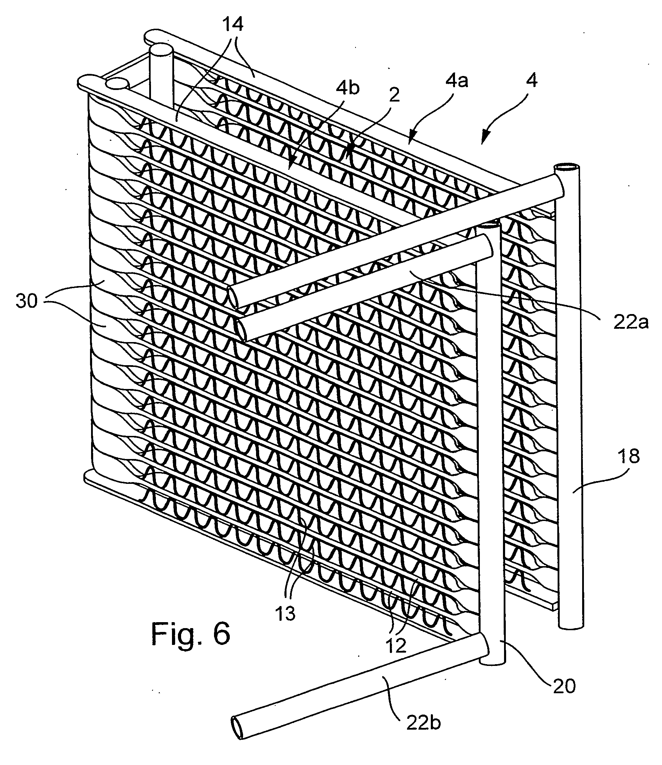

Für eine selektive Beaufschlagung des Luftstroms L mit dem Kühlmittelstrom K1 und/oder dem Kältemittelstrom K2 ist/sind der erste Wärmeübertrager 2 und/oder der zweite Wärmeübertrager 4 segmentiert ausgebildet. In Figur 6 ist beispielhaft die Unterteilung des zweiten Wärmeübertragers 4 in Segmente 30 dargestellt. Dazu ist das Sammelrohr 20 derart unterteilt, dass eine betreffende Anzahl von die Kältemittelrohrreihe 14 des Teilelements 4b bildenden Kältemittelrohren 12 in einen Auslass 22a und die andere Anzahl von Kältemittelrohren 12 in einen weiteren Auslass 22b münden. Je nach Anordnung der Kältemittelrohre 12 bzw. der Kühlmittelrohre 21, d. h. horizontale Anordnung oder vertikale Anordnung dieser, kann eine individuelle Temperierung einzelner Zonen des Luftstroms L, z. B. eine sogenannte Links-Rechts-Trennung oder auch eine Vier-Zonen-Klimatisierung, im Heizmodus eines Wärmepumpenbetriebs möglich sein. Weiterhin kann die zwischen den einzelnen Kühlmittelrohren 21 und Kältemittelrohren 12 der Teilelemente 4a, 4b verlaufende Verrippung 13 ist als eine die gesamte Wärmeübertrageranordnung 1 durchlaufende Rippe 28 ausgebildet sein.

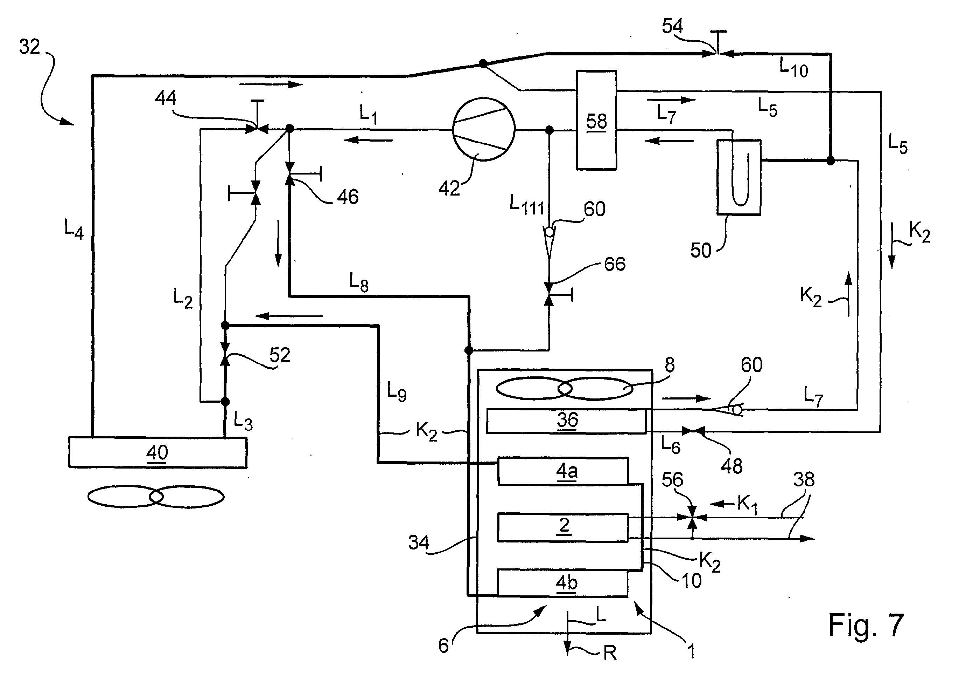

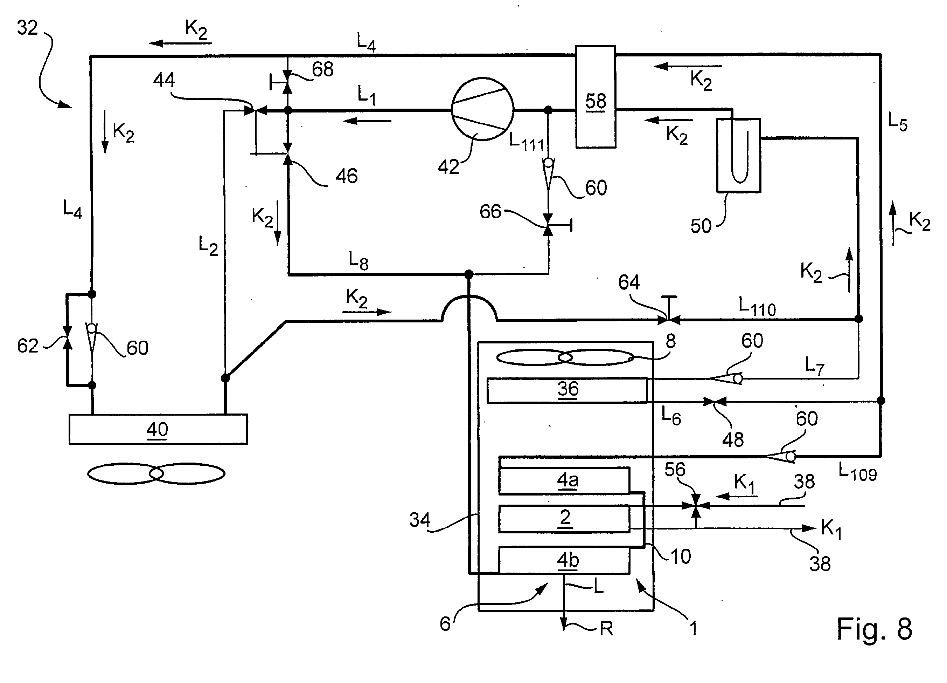

Die Figuren 7 und 8 zeigen eine Wärmeübertrageranordnung 1 in einem Heiz-/Kühlkreislauf 32 für eine Klimaanlage eines Fahrzeugs. Der Heiz-/Kühlkreislauf 32 weist ein Klimagerät 34 auf, welches für verschiedene Funktionen, z. B. für einen Heizmodus, ein Entfeuchtungsmodus und/oder einen Kühlmodus, ausgelegt ist. Dabei umfasst das Klimagerät 34 einen in Luftströmungsrichtung R gesehen, nach dem Gebläse 8 angeordneten Verdampfer 36. Dem Verdampfer 36 ist luftströmungsseitig die Wärmeübertrageranordnung 1 nachgeschaltet. Der erste Wärmeübertrager 2 ist über Kühlmittelleitungen 38 mit einem nicht näher dargestellten Antriebsaggregat des Fahrzeuges verbunden, so dass heißes Kühlmittel K1 den ersten Wärmeübertrager 2 durchströmen kann. Neben dem Klimagerät 34 weist der Heiz-/Kühlkreislauf 32 einen Außenwärmeübertrager 40 und einen Kompressor 42 auf. Diese Komponenten des Heiz-/Kühlkreislaufes 32, d. h. das Klimagerät 34, der Außenwärmeübertrager 40 und der Kompressor 42 sind über Kältemittelleitungen L1 bis L10 miteinander verbunden. Im Betrieb des Heiz-/Kühlkreislaufes 32, insbesondere im Kühlmodus, wenn also die dem Fahrzeuginnenraum zuzuführende Luft L ausschließlich gekühlt werden soll, ist der Heiz-/Kühlkreislauf 32 wie folgt verschaltet:

Ausgehend vom Kompressor 42 wird das Kältemittel K2 über Leitungen L1, L2 und L3 dem Außenwärmeübertrager 40 zugeführt. Dazu ist ein Ventil 44 geöffnet und ein Ventil 46 geschlossen. Im Außenwärmeübertrager 40 wird das als Heißgas vorliegende Kältemittel K2 abgekühlt. vom Außenwarmeübertrager 40 strömt das Kältemittel K2 über Leitungen L4 und L5 zu einem ersten Expansionsorgan 48. Beim Durchströmen des Expansionsorgans 48 entspannt das Kältemittel K2 und wird über die Leitung L6 dem Verdampfer 36 zugeführt, in dem das Kältemittel K2 verdampft und somit der zu kühlenden Luft L Wärme entzieht. Über eine Leitung L7 wird das Kältemittel K2 über einen Kältemittelsammler 50 zurück zum Kompressor 42 geführt.

Im Kühlmodus ist die Wärmeübertrageranordnung 1 nicht im Betrieb und das Kältemittel K2 wird über die Leitung L2 an diesem und einem zweiten Expansionsorgan 52 vorbeigeführt, so dass die Leitung L2 als Heizbypassleitung eingesetzt ist. Als Kältemittel K2 wird beispielsweise CO₂ oder ein anderes Kältemittel eingesetzt.

Im Heizmodus, wenn die dem Fahrzeuginnenraum zuzuführende Luft L ausschließlich aufgeheizt werden soll, ist der Verdampfer 36 außer Betrieb und die Wärmeübertrageranordnung 1 in Betrieb. Dazu arbeitet der Heiz-/Kühlkreislauf 32 als sogenannte Wärmepumpe und im sogenannten Wärmepumpenbetrieb. Dabei wird das Kältemittel K2 vom Kompressor 42 über die Leitungen L1 und L8 als Heißgas der Wärmeübertrageranordnung 1 zugeführt. Insbesondere wird das Kältemittel K2 den strömungsausgangsseitig im Luftströmungskanal 6 angeordneten Teilelement 4b des zweiten Wärmeübertragers 4 zugeführt. Hierbei gibt das Kältemittel K2 Wärme an den im Luftströmungskanal 6 geführten Luftstrom L ab und heizt somit den Luftstrom L auf. Vom in Luftströmungsrichtung R gesehenen, zweiten Teilelement 4b wird das Kältemittel K2 über die Umlenkungsrohre 10 dem ersten Teilelement 4a zugeführt, wodurch der Luftstrom L nochmals aufgeheizt wird, indem das Kältemittel K2 Wärme abgibt. Anschließend wird das Kältemittel K2 über eine Leitung L9 dem zweiten Expansionsorgan 52 zugeführt und dort entspannt. Über eine Leitung L3 wird das Kältemittel K2 dem Außenwärmeübertrager 40 zugeführt, der jetzt als Verdampfer betreibbar ist, in dem das Kältemittel K2 verdampft und der Außenluft Wärme entzieht. Über Leitungen L4, L10 sowie L7 wird das Kältemittel K2 über den Kältemittelsammler 50 wieder dem Kompressor 42 zugeführt. Die Leitung L10, die über ein Ventil 54 absperrbar ist, dient im Heizmodus als Kühlbypassleitung zur kältemittelseitigen Umgehung des Verdampfers 36.

Zusätzlich kann im Heizmodus der erste Wärmeübertrager 2 betrieben werden, indem ein Heizungsventil 56 entsprechend geöffnet wird, so dass heißes Kühlmittel K1 vom Antriebsaggregat zum ersten Wärmeübertrager 2 strömen kann.

Im Re-Heat-Betrieb, der zum Entfeuchten und Erwärmen der dem Fahrzeuginnenraum zuzuführenden Luft L dient, sind sowohl der Verdampfer 36 als auch die Wärmeübertrageranordnung 1 im Betrieb, so dass die Luft L zunächst im Verdampfer 36 abgekühlt werden kann und die in der Luft L enthaltene Feuchtigkeit auskondensieren kann. Bevor die Luft L dem Fahrzeuginnenraum zugeführt wird, kann sie in der Wärmeübertrageranordnung 1, insbesondere im zweiten Wärmeübertrager 4 und optional im ersten Wärmeübertrager 2 wieder erwärmt werden.

Das Kältemittel K2 wird im Re-Heat-Betrieb ausgehend vom Kompressor 42 über die Leitungen L1 und L8 der Wärmeübertrageranordnung 1 zugeführt, so dass in der Wärmeübertrageranordnung 1 das Kältemittel K2 Wärme an die Luft L abgeben kann. Über die Leitung L9 wird das Kältemittel K2 zum Expansionsorgan 52 geführt. Dieses kann es ja nach dessen Einstellung ohne wesentlichen Druckverlust passieren, oder aber auf einen vorteilhaften Druck gedrosselt werden. Über die Leitung L3 wird das Kältemittel K2 zum Außenwärmeübertrager 40 geführt und von dort über Leitungen L4, L5 dem ersten Expansionsorgan 48 und über die Leitung L6 dem Verdampfer 36 zugeführt. Vom Verdampfer 36 wird das Kältemittel K2 über die Leitung L7 wieder über den Kältemittelsammler 50 zum Kompressor 42 geführt.

Je nach Art und Ausbildung des Heiz-/Kühlkreislaufes 32 kann zwischen dem Kältemittelsammler 50 und dem Kompressor 42 ein dritter Wärmeübertrager 58, ein sogenannter innerer Wärmeübertrager 58 vorgesehen sein. Der innere Wärmeübertrager 58 ist dabei insbesondere bei einem CO₂ verwendeten Kältemittel K2 zur Leistungserhöhung vorgesehen, wobei der Wärmeübertrager 58 einen Wärmeübertrag zwischen einem hochdruckseitigen Abschnitt (= Leitung L5) und einem niederdruckseitigen (=Leitung L7) bewirkt. In der Fig. 7 ist der Heiz-/Kühlkreislauf so verschaltet, dass der innere Wärmeübertrager 58 im Kühlbetrieb aktiviert ist und im Wärmepumpenbetrieb funktionslos ist. In der Fig. 8 ist der Heiz-/Kühlkreislauf so verschaltet, dass der innere Wärmeübertrager 58 sowohl im Kühlbetrieb als auch im Wärmepumpenbetrieb aktiviert ist. In der Figur 8 wird der Heiz-/Kühlkreislauf 32 mit dem im Wärmepumpenbetrieb zur Leistungserhöhung betriebenen inneren Wärmetauscher 58 dargestellt. Im Heizbetrieb beispielsweise strömt dabei das Kältemittel K2 durch das Ventil 46 über die Leitung L8 zur Wärmeübertrageranordnung 1, wo es den Luftstrom L erwärmt. Von dort strömt es durch die Leitung L109 und L5 zum inneren Wärmeübertrager 58, der jetzt auf der Hochdruckseite in anderer Richtung durchströmt wird als im Kühlbetrieb. Ein in der Leitung L4 nach dem inneren Wärmeübertrager 58 angeordnetes Rückschlagventil 60 ist in der vorgegebenen Strömungsrichtung geschlossen, so dass das Kältemittel K2 durch ein weiteres Expansionsorgan 62 auf niedrigen Druck gedrosselt und im Außenwärmeübertrager 40 durch Wärmeaufnahme aus der Umgebung verdampft wird. Darüber hinaus sind in den Leitungen L7, L111, L109 weitere Rückschlagventile 60 geschaltet. Auch der Außenwärmeübertrager 40 wird im Heizbetrieb oder Heizmodus in anderer Richtung durchströmt als im Kühlmodus. Das Sauggas strömt durch ein weiteres Ventil 64 über eine Leitung L110 zum Kältemittelsammler 50 und von dort durch den inneren Wärmeübertrager 58, wo es erwärmt und vorzugsweise vollständig verdampft oder sogar überhitzt wird. Vom inneren Wärmeübertrager 58 strömt es in den Kompressor 42 und wird dort auf einen höheren Druck verdichtet. Das Expansionsventil 52 ist geschlossen und der Verdampfer 36 wird in diesem Heizmodus nicht durchströmt und ist somit außer Funktion.

Eine zwischen dem Kompressor 42 und dem inneren Wärmeübertrager 58 abgehende Leitung L111 ist durch ein weiteres Organ 66 kontinuierlich gedrosselt. In diesem Fall ist auch hier die Positionierung des niederdruckseitigen Endes der Leitung L111 zwischen dem inneren Wärmeübertrager 58 und dem Kompressor 42 weitgehend optimal, um eine Leistungseinbuße durch diesen Teilstrom zu minimieren. Der Teilstrom wird daher möglichst klein gewählt. Falls durch die dargestellte Positionierung der Leitung L111 unvertretbar hohe Heißgastemperaturen auftreten, kann das niederdruckseitige Ende der Leitung L111 alternativ auch zwischen dem Kältemittelsammler 50 und dem inneren Wärmetauscher 58 oder auch zwischen dem Expansionsorgan 52 und dem Kältemittelsammler 50 positioniert werden. Zusätzlich kann durch ein Öffnen des Expansionsventils oder -organs 52 der Verdampfer 36 aktiviert werden, so dass der Luftstrom L entfeuchtet wird.

Im Falle der Vereisung des Außenwärmeübertragers 40 kann der Heiz-/Kühlkreislauf 32 des weiteren durch ein Ventil 68 in einen Abtaubetrieb geschaltet. Das Ventil 68 ist dabei zwischen der Leitung L1 und der Leitung L4 geschaltet. Dabei fließt das Kältemittel K2 in diesem Fall vom Kompressor 42 über das Ventil 68 (Ventile 46 und 44 sind geschlossen) zum Expansionsorgan 62, wo es gedrosselt wird und dann im Außenwärmeübertrager 40 Wärme an die Umgebung abgibt, wodurch der Außenwärmeübertrager 40 enteist und somit wieder aufgetaut wird. Das Kältemittel K2 wird anschließend über das Ventil 64 der Leitung L110 dem Kältemittelsammler 50 und dem in diesem Falle funktionslosen inneren Wärmeübertrager 58 zugeführt und anschließend zum Kompressor 42 zurückgeführt.

### Bezugszeichenliste

- 1: Wärmeübertrageranordnung
- 2, 4: Wärmeübertrager
- 4a, 4b: Teilelemente des zweiten Wärmeübertragers 4
- 6: Luftströmungskanal
- 8: Gebläse
- 10: Umlenkkanal
- 12: Kältemittelrohre
- 13: Verrippung
- 14: Kältemittelrohrreihen
- 16: Umlenkungsrohre
- 18: Sammelrohr
- 20: Verteilerrohr
- 21: Kühlmittelrohre
- 22, 22a, 22b: Einlässe
- 24: Auslässe
- 26: Wasserkasten
- 28: Rippe
- 30: Segmente des Wärmeübertragers 4
- 32: Heiz-/Kühlkreislauf
- 34: Klimagerät
- 36: Verdampfer
- 38: Kühlmittelleitungen
- 40: Außenwärmeübertrager
- 42: Kompressor
- 44, 46: Ventile
- 48: erstes Expansionsorgan
- 50: Kältemittelsammler
- 52: zweites Expansionsorgan
- 54: Ventil
- 56: Heizungsventil
- 58: dritter, innerer Wärmeübertrager
- 60: Rückschlagventil
- 62: Expansionsorgan
- 64: Ventil
- 66: Organ
- 68: Ventil

- K1: Kühlmittel/Kühlmittelstrom
- K2: Kältemittel/Kältemittelstrom
- L: Luft, Luftstrom
- L1-L10: Leitungen, insbesondere Kältemittelleitungen
- L109-111: Leitungen, insbesondere Kältemittelleitungen
- R: Luftströmungsrichtung

## Patentansprüche

1. Klimaanlage für ein Fahrzeug mit einem Heiz-/Kühlkreislauf (32), umfassend eine Wärmeübertrageranordnung (1) mit einem ersten von einem Kühlmittel (K1) primärseitig beaufschlagbaren Wärmeübertrager (2) und einen zweiten von einem Kältemittel (K2) primärseitig beaufschlagbaren Wärmeübertrager (4) die sekundärseitig in einen Luftströmungskanal (6) geschaltet sind, **dadurch gekennzeichnet, daß** der Luftströmungskanal (6) der Durchströmung von dem Fahrzeuginnenraum zuzuführender Luft (L) dient, und daß der zweite Wärmeübertrager (4) in zwei Teilelemente (4a, 4b) aufgeteilt ist und der erste Wärmeübertrager (2) in Luftströmungsrichtung (R) gesehen zwischen den beiden Teilelementen (4a, 4b) geschaltet ist.

2. Klimaanlage nach Anspruch 1, bei der zur Zuführung des Kältemittels (K2) ein Einlass (22) in das in Luftströmungsrichtung (R) gesehen zweite Teilelement (4b) mündet.

3. Klimaanlage nach Anspruch 1 oder 2, bei der zur Abführung des Kältemittels (K2) ein Auslass (24) von dem in Luftströmungsrichtung (R) gesehen ersten Teilelement (4a) abgeht.

4. Klimaanlage nach einem der Ansprüche 1 bis 3, bei der ein dritter Wärmeübertrager (58) zur Vorwärmung des in einen Kompressor (42) Kältemittels (K2) durch vom ersten Teilelement (4a) abgeführten Kältemittel (K2) vorgesehen ist.

5. Klimaanlage nach einem der Ansprüche 1 bis 4, bei der der zweite Wärmeübertrager (4) durch eine Anzahl von parallel durchströmbaren und in einer Ebene parallel zueinander angeordneten Kältemittelrohren (12) gebildet ist.

6. Klimaanlage nach einem der Ansprüche 1 bis 5, bei der die Teilelemente (4a, 4b) des zweiten Wärmeübertragers (4) durch in Luftströmungsrichtung (R) gesehen hintereinander geschaltete Kältemittelrohrreihen (14) gebildet sind.

7. Klimaanlage nach Anspruch 6, bei der die einzelnen Kältemittelrohre (12) der Kältemittelrohrreihen (14) anhand von Umlenkungsrohren (16) miteinander verbunden sind.

8. Klimaanlage nach einem der Ansprüche 5 bis 7, bei der die Kältemittelrohre (12) eines der beiden Teilelemente (4a, 4b), insbesondere des zweiten Teilelementes (4b) zur Bespeisung an ein gemeinsames Sammelrohr (18) angebunden sind.

9. Klimaanlage nach einem der Ansprüche 5 bis 8, bei der die Kältemittelrohre (12) eines der beiden Teilelemente (4a, 4b), insbesondere des ersten Teilelementes (4a) zum Austritt des Kältemittels (K2) an ein gemeinsames Verteilerrohr (20) angebunden sind.

10. Klimaanlage nach einem der Ansprüche 1 bis 9, bei der der erste Wärmeübertrager (2) durch eine Anzahl von parallel durchströmbaren und in einer Ebene parallel zueinander angeordneten Kühlmittelrohren gebildet ist.

11. Klimaanlage nach Anspruch 10, bei der die Kältemittelrohre (12) des zweiten Wärmeübertragers (4) senkrecht zu den Kühlmittelrohren (21) des ersten Wärmeübertragers (2) angeordnet sind.

12. Klimaanlage nach Anspruch 10 oder 11, bei der die Kältemittelrohre (12) des zweiten Wärmeübertragers (4) waagerecht und die Kühlmittelrohre (21) des ersten Wärmeübertragers (2) senkrecht angeordnet sind.

13. Klimaanlage nach einem der Ansprüche 1 bis 12, bei der das jeweilige Teilelement (4a, 4b) des zweiten Wärmeübertragers (4) zur selektiven Beaufschlagung mit Kältemittel (K2) segmentiert ausgebildet ist.

14. Klimaanlage nach einem der Ansprüche 1 bis 13, bei der der erste Wärmeübertrager (2) und der zweite Wärmeübertrager (4) im Luftströmungskanal (6) im Kreuzgleichstrom geschaltet sind.

15. Klimaanlage nach einem der Ansprüche 1 bis 14, bei der der erste Wärmeübertrager (2) und der zweite Wärmeübertrager (4) im Luftströmungskanal (6) im Kreuzgegenstrom geschaltet sind.

16. Klimaanlage nach einem der Ansprüche 1 bis 15, bei der der erste Wärmeübertrager (2) und der zweite Wärmeübertrager (4) in ein Modul integriert sind.

17. Klimaanlage nach einem der Ansprüche 1 bis 16, bei der der erste Wärmeübertrager (2) und der zweite Wärmeübertrager (4) über eine durchgehende Rippe (28) verbunden sind.

18. Klimaanlage nach Anspruch 17, bei der die Rippe (28) mit einer Ausnehmung versehen ist.

19. Klimaanlage nach einem der Ansprüche 1 bis 15, bei der der erste Wärmeübertrager (2) und der zweite Wärmeübertrager (4) getrennt voneinander angeordnet sind.

20. Klimaanlage nach einem der Ansprüche 1 bis 19, bei der der erste Wärmeübertrager (2) und der zweite Wärmeübertrager (4) mit einem Abstand von 1 mm bis 5 mm voneinander angeordnet sind.

21. Heiz-/Kühlkreislauf (32) eines Fahrzeugs mit einer Klimaanlage nach einem der Ansprüche 1 bis 20.

22. Heiz-/Kühlkreislauf (32) nach Anspruch 21, bei dem die in einem Luftströmungskanal (6) der Klimaanlage sekundärseitig geschaltete Wärmeübertrageranordnung (1) einen ersten im Kühlmodus und/oder im Heizmodus von einem Kühlmittel (K1) primärseitig durchströmbaren Wärmeübertrager (2) und einen zweiten im Heizmodus von einem Kältemittel (K2) primärseitig durchströmbaren Wärmeübertrager (4) umfasst, wobei der erste Wärmeübertrager (2) in Luftströmungshchtung (R) gesehen zwischen zwei Teilelementen (4a, 4b) des zweiten Wärmeübertragers (4) geschaltet ist.

23. Verfahren zur Steuerung und/oder Regelung eines Heiz-/Kühlkreislaufs (32) einer Klimaanlage für ein Fahrzeug, wobei ein zu klimatisierender Luftstrom (L) für den Innenraum des Fahrzeugs im Heizmodus in Luftströmungsrichtung (R) gesehen mittels eines zweistufigen Kältemittelstromes (K2) und eines zwischen den zwei Kältemittelströmen (K2) geschalteten Kühlmittelstromes (K1) aufgeheizt wird.

24. Verfahren nach Anspruch 23, bei dem die Kältemittelströme (K2) und der Kühlmittelstrom (K1) im Kreuzgleichstrom zum Luftstrom (L) geführt werden.

25. Verfahren nach Anspruch 23 oder 24, bei dem die Kältemittelströme (K2) und der Kühlmittelstrom (K1) im Kreuzgegenstrom zum Luftstrom (L) geführt werden.

## Claims

1. An air conditioning system for a vehicle having a heating/cooling circuit (32) comprising a heat exchanging arrangement (1) with a first heat exchanger (2) to the primary side of which a coolant (K1) can be applied and a second heat exchanger (4) to the primary side of which a refrigerant (K2) can be applied, said heat exchangers (2, 4) being connected on their secondary sides to an air flow duct (6),
**characterised in that**
the air flow duct (6) serves to channel the air (L) to be fed to the interior of the vehicle, the second heat exchanger (4) is divided into sub-elements (4a, 4b) and the first heat exchanger (2) is positioned between the two sub-elements (4a, 4b) when seen in the direction of air flow (R).

2. An air conditioning system in accordance with claim 1,
in which an inlet (22) opens into the second sub-element (4b) seen in the direction of air flow (R) to supply the refrigerant (K2).

3. An air conditioning system in accordance with claim 1 or 2,
in which an outlet (24) leads out from the first sub-element (4a) seen in the direction of air flow (R) to discharge the refrigerant (K2).

4. An air conditioning system in accordance with one claims 1 to 3,
in which a third heat exchanger (58) is provided to pre-warm the refrigerant (K2) discharged from the first sub-element (4a) into a compressor (42).

5. An air conditioning system in accordance with one claims 1 to 4,
in which the second heat exchanger (4) takes the form of a plurality of coolant tubes (12) positioned parallel to one another in one plane and through which coolant is able to flow in parallel.

6. An air conditioning system in accordance with one of claims 1 to 5,
in which the sub-elements (4a, 4b) of the second heat exchanger (4) take the form of coolant tube rows (14) connected one behind another in the direction of air flow (R).

7. An air conditioning system in accordance with claim 6,
in which the individual coolant tubes (12) of the coolant tube rows (14) are connected together using diverting tubes (16).

8. An air conditioning system in accordance with one of claims 5 to 7,
in which the coolant tubes (12) of one of the two sub-elements (4a, 4b), in particular of the second sub-element (4b), are connected to a common collecting tube (18) by which they are fed.

9. An air conditioning system in accordance with one of claims 5 to 8,
in which the coolant tubes (12) of one of the two sub-elements (4a, 4b), in particular of the first sub-element (4a), are connected to a common distribution tube (20) by which the refrigerant (K2) is discharged.

10. An air conditioning system in accordance with one of claims 1 to 9,
in which the first heat exchanger (2) takes the form of a plurality of coolant tubes positioned parallel to one another in one plane and through which coolant is able to flow in parallel.

11. An air conditioning system in accordance with claim 10,
in which the coolant tubes (12) of the second heat exchanger (4) are positioned perpendicular to the coolant tubes (21) of the first heat exchanger (2).

12. An air conditioning system in accordance with claim 10 or 11,
in which the coolant tubes (12) of the second heat exchanger (4) are positioned horizontally and the coolant tubes (21) of the first heat exchanger (2) are positioned vertically.

13. An air conditioning system in accordance with one of claims 1 to 12,
in which the sub-elements (4a, 4b) of the second heat exchanger (4) are designed with segments for the selective application of refrigerant (K2).

14. An air conditioning system in accordance with one of claims 1 to 13,
in which the first heat exchanger (2) and the second heat exchanger (4) are positioned in the air flow duct (6) in cross flow.

15. An air conditioning system in accordance with one of claims 1 to 14,
in which the first heat exchanger (2) and the second heat exchanger (4) are positioned in the air flow duct (6) in cross counter flow.

16. An air conditioning system in accordance with one of claims 1 to 15,
in which the first heat exchanger (2) and the second heat exchanger (4) are integrated in one module.

17. An air conditioning system in accordance with one of claims 1 to 16,
in which the first heat exchanger (2) and the second heat exchanger (4) are connected by a continuous rib (28).

18. An air conditioning system in accordance with claim 17,
in which the rib (28) is provided with a recess.

19. An air conditioning system in accordance with one of claims 1 to 15,
in which the first heat exchanger (2) and the second heat exchanger (4) are positioned separately from one another.

20. An air conditioning system in accordance with one of claims 1 to 19, the first heat exchanger (2) and the second heat exchanger (4) are positioned a distance of 1 to 5 mm apart.

21. A heating/cooling circuit (32) in a vehicle having an air conditioning system in accordance with one of claims 1 to 20.

22. A heating/cooling circuit (32) in accordance with claim 2,
in which the heat exchanging arrangement (1) which is positioned on the secondary side of an air flow duct (6) of the air conditioning system comprises a first heat exchanger (2) through the primary side of which a coolant (K1) is able to flow in cooling and/or in heating mode and a second heat exchanger (4) through the primary side of which a refrigerant (K2) is able to flow in heating mode, the first heat exchanger (2) being positioned between two sub-elements (4a, 4b) of the second heat exchanger (4) when seen in the direction of air flow (R).

23. A process for controlling and/or regulating a heating/cooling circuit (32) of an air conditioning system for a vehicle, in heating mode a flow of air (L) to be conditioned for the interior of the vehicle being heated between a two-stage refrigerant flow (K2) and a coolant (K1) flow positioned between the two refrigerant flows (K2) seen in the direction of air flow (R).

24. A process in accordance with claim 23,
in which the refrigerant flows (K2) and the coolant flows (K1) are guided in cross flow to the air flow (L).

25. A process in accordance with claim 23 or 24,
in which the refrigerant flows (K2) and the coolant flows (K1) are guided in cross current flow to the air flow (L).

## Revendications

1. Installation de climatisation pour un véhicule, comportant un circuit de chauffage et refroidissement (32), formé par un dispositif échangeur de chaleur (1) avec un premier échangeur de chaleur (2) pouvant être sollicité du côté primaire par un fluide de refroidissement (K1), et un deuxième échangeur de chaleur (4) pouvant être sollicité du côté primaire par un fluide frigorigène (K2), lesquels échangeurs de chaleur sont montés du côté secondaire dans un conduit de circulation d'air (6), **caractérisée en ce que** le conduit de circulation d'air (6) est destiné au passage de l'air (L) à acheminer dans l'habitacle du véhicule, et **en ce que** le deuxième échangeur de chaleur (4) est divisé en deux éléments partiels (4a, 4b) et le premier échangeur de chaleur (2) est monté entre les deux éléments partiels (4a, 4b) dans la direction de la circulation d'air (R).

2. Installation de climatisation selon la revendication 1, dans laquelle, pour l'amenée du fluide frigorigène (K2), une entrée (22) débouche dans le deuxième élément partiel (4b) vu dans la direction de la circulation d'air (R).

3. Installation de climatisation selon la revendication 1 ou 2, dans laquelle, pour le retour du fluide frigorigène (K2), une sortie (24) part du premier élément partiel (4a) vu dans la direction de la circulation d'air (R).

4. Installation de climatisation selon l'une des revendications 1 à 3, dans laquelle un troisième échangeur de chaleur (58) est prévu pour le préchauffage du fluide frigorigène (K2) dans un compresseur (42) par le fluide frigorigène (K2) évacué du premier élément partiel (4a).

5. Installation de climatisation selon l'une des revendications 1 à 4, dans laquelle le deuxième échangeur de chaleur (4) est formé par un nombre de tuyaux de fluide frigorigène (12) pouvant être traversés en parallèle et disposés parallèlement les uns aux autres dans un plan.

6. Installation de climatisation selon l'une des revendications 1 à 5, dans laquelle les éléments partiels (4a, 4b) du deuxième échangeur de chaleur (4) sont formés par des rangées de tuyaux de fluide frigorigène (14) montés les uns derrière les autres vu dans la direction de la circulation d'air (R).

7. Installation de climatisation selon la revendication 6, dans laquelle les différents tuyaux de fluide frigorigène (12) des rangées de tuyaux de fluide frigorigène (14) sont reliés entre eux à l'aide de tuyaux de renvoi.

8. Installation de climatisation selon l'une des revendications 5 à 7, dans laquelle les tuyaux de fluide frigorigène (12) d'un des deux éléments partiels (4a, 4b), en particulier du deuxième élément partiel (4b), sont raccordés pour l'alimentation d'un tuyau collecteur (18) commun.

9. Installation de climatisation selon l'une des revendications 5 à 8, dans laquelle les tuyaux de fluide frigorigène (12) d'un des deux éléments partiels (4a, 4b), en particulier du premier élément partiel (4a), sont raccordés pour la sortie du fluide frigorigène (K2) à un tuyau distributeur (20) commun.

10. Installation de climatisation selon l'une des revendications 1 à 9, dans laquelle le premier échangeur de chaleur (2) est formé par un nombre de tuyaux de fluide frigorigène pouvant être traversés en parallèle et disposés parallèlement les uns aux autres dans un plan.

11. Installation de climatisation selon la revendication 10, dans laquelle les tuyaux de fluide frigorigène (12) du deuxième échangeur de chaleur (4) sont disposés perpendiculairement aux tuyaux de fluide frigorigène (21) du premier échangeur de chaleur (2).

12. Installation de climatisation selon la revendication 10 ou 11, dans laquelle les tuyaux de fluide frigorigène (12) du deuxième échangeur de chaleur (4) sont disposés horizontalement et les tuyaux de fluide frigorigène (21) du premier échangeur de chaleur (2) sont disposés verticalement.

13. Installation de climatisation selon l'une des revendications 1 à 12, dans laquelle l'élément partiel respectif (4a, 4b) du deuxième échangeur de chaleur (4) est formé segmenté pour la sollicitation sélective en fluide frigorigène (K2).

14. Installation de climatisation selon l'une des revendications 1 à 13, dans laquelle le premier échangeur de chaleur (2) et le deuxième échangeur de chaleur (4) sont montés dans le conduit de circulation d'air (6) à co-courant et à courants croisés.

15. Installation de climatisation selon l'une des revendications 1 à 14, dans laquelle le premier échangeur de chaleur (2) et le deuxième échangeur de chaleur (4) sont montés dans le conduit de circulation d'air (6) à contre-courant et à courants croisés.

16. Installation de climatisation selon l'une des revendications 1 à 15, dans laquelle le premier échangeur de chaleur (2) et le deuxième échangeur de chaleur (4) sont intégrés dans un module.

17. Installation de climatisation selon l'une des revendications 1 à 16, dans laquelle le premier échangeur de chaleur (2) et le deuxième échangeur de chaleur (4) sont reliés par une ailette (28) traversante.

18. Installation de climatisation selon la revendication 17, dans laquelle l'ailette (28) est dotée d'un évidement.

19. Installation de climatisation selon l'une des revendications 1 à 15, dans laquelle le premier échangeur de chaleur (2) et le deuxième échangeur de chaleur (4) sont disposés séparément l'un de l'autre.

20. Installation de climatisation selon l'une des revendications 1 à 19, dans laquelle le premier échangeur de chaleur (2) et le deuxième échangeur de chaleur (4) sont disposés avec une distance de 1 mm à 5 mm l'un de l'autre.

21. Circuit de chauffage et refroidissement (32) d'un véhicule avec une installation de climatisation selon l'une des revendications 1 à 20.

22. Circuit de chauffage et refroidissement (32) selon la revendication 21, dans lequel le dispositif échangeur de chaleur (1) monté côté secondaire dans un conduit de circulation d'air (6) de l'installation de climatisation comporte un premier échangeur de chaleur (2) pouvant être traversé côté primaire dans le mode de refroidissement et/ou dans le mode de chauffage par un fluide de refroidissement (K1) et un deuxième échangeur de chaleur (4) pouvant être traversé côté primaire dans le mode de chauffage par un fluide frigorigène (K2), sachant que le premier échangeur de chaleur (2) est monté, vu dans la direction de la circulation d'air (R) entre deux éléments partiels (4a, 4b) du deuxième échangeur de chaleur (4).

23. Procédé de commande et/ou de régulation d'un circuit de chauffage et refroidissement (32) d'un véhicule, dans lequel un flux d'air à climatiser (L) pour l'intérieur du véhicule est chauffé dans le mode de chauffage au moyen d'un flux de fluide frigorigène (K2) bi-étagé et d'un flux de fluide de refroidissement (K1) monté, vu dans la direction de la circulation d'air (R), entre les deux flux de fluide frigorigène (K2).

24. Procédé selon la revendication 23, dans lequel les flux de fluide frigorigène (K2) et le flux de fluide de refroidissement (K1) sont acheminés à co-courant et à courants croisés par rapport au flux d'air à climatiser (L).

25. Procédé selon la revendication 23 ou 24, dans lequel les flux de fluide frigorigène (K2) et le flux de fluide de refroidissement (K1) sont acheminés à contre-courant et à courants croisés par rapport au flux d'air à climatiser (L).
